# EUROPEAN PATENT APPLICATION

(11) **EP 4 177 538 A1**
(43) Date of publication of application: **10.05.2023**
(21) Application number: 21834497.6
(22) Date of filing: 05.07.2021
(51) Int. Cl.: F25B 1/00, C09K 5/04

(54) **USE AS REFRIGERANT IN COMPRESSOR, COMPRESSOR, AND REFRIGERATION CYCLE APPARATUS**

(30) Priority: 03.07.2020 JP 2020115910
(71) Applicant: Daikin Industries, Ltd., Osaka-shi, Osaka 530-0001 (JP)
(72) Inventor: GOTOU, Tomoyuki, Osaka-shi, Osaka 530-8323 (JP); YOSHIMURA, Takashi, Osaka-shi, Osaka 530-8323 (JP); USUI, Takashi, Osaka-shi, Osaka 530-8323 (JP); ITOU, Yuuko, Osaka-shi, Osaka 530-8323 (JP); WATANABE, Yuka, Osaka-shi, Osaka 530-8323 (JP); IWASAKA, Takuma, Osaka-shi, Osaka 530-8323 (JP); TAKAKURA, Youhei, Osaka-shi, Osaka 530-8323 (JP); YOTSUMOTO, Yuuki, Osaka-shi, Osaka 530-8323 (JP); TOKUNO, Satoshi, Osaka-shi, Osaka 530-8323 (JP); DEGUCHI, Ryohei, Osaka-shi, Osaka 530-8323 (JP)
(74) Representative: Hoffmann Eitle
(86) International application number: PCT/JP2021/025308
(87) International publication number: WO 2022/004895

(57) **Abstract**

The propagation of a disproportionation reaction of a refrigerant is suppressed. Disclosed is the use of a composition as a refrigerant in a compressor (21), in which the composition includes one or more compounds selected from the group consisting of ethylene-based fluoroolefins, 2,3,3,3-tetrafluoropropene (HFO-1234yf), and 1,3,3,3-tetrafluoropropene (HFO-1234ze), and the flow rate of the refrigerant flowing through a discharge pipe (95) of the compressor under a predetermined high-pressure condition is greater than or equal to 1 m/s.

## Description

### TECHNICAL FIELD

The present disclosure relates to the use of a composition as a refrigerant in a compressor, the compressor, and a refrigeration cycle apparatus.

### BACKGROUND ART

Conventionally, hydrofluoroolefins (HFO refrigerants) having lower global warming potential (hereinafter also simply referred to as GWP) than HFC refrigerants have attracted attention for refrigeration apparatuses. For example, 1,2-difluoroethylene (HFO-1132) is considered as a refrigerant with low GWP in Patent Literature 1 (Japanese Patent Laid-Open No. 2019-196312).

### SUMMARY OF THE INVENTION

### <Technical Problem>

Although such HFO refrigerants have low GWP, they are not stable. Thus, some of such HFO refrigerants are likely to undergo a self-decomposition reaction called a disproportionation reaction under given conditions. The disproportionation reaction is a chemical reaction in which two or more molecules of the same type mutually react, for example, to convert into substances of two or more different types. The disproportionation reaction of the HFO refrigerants generated in such a manner may propagate in some cases.

An object of the present disclosure is to suppress the propagation of a disproportionation reaction of a refrigerant.

### <Solution to Problem>

The inventors of the present application have conducted concentrated studies to suppress the propagation of a disproportionation reaction of a refrigerant, and newly found that a disproportionation reaction of a refrigerant is likely to propagate in a portion where the flow rate of the refrigerant is low, but the propagation of the disproportionation reaction is suppressed in a portion where the flow rate of the refrigerant is high. The inventors of the present application have conducted further research based on such findings to arrive at the present disclosure. The present disclosure provides the use of composition as a refrigerant in a compressor, the compressor, and a refrigeration cycle apparatus according to the following aspects.

The use of a composition as a refrigerant in a compressor according to a first aspect is the use of a composition as a refrigerant in a compressor in which the flow rate of the refrigerant flowing through a discharge pipe of the compressor under a predetermined high-pressure condition is greater than or equal to 1 m/s. The composition includes one or more compounds selected from the group consisting of ethylene-based fluoroolefins, 2,3,3,3-tetrafluoropropene (HFO-1234yf), and 1,3,3,3-tetrafluoropropene (HFO-1234ze).

According to such use of the composition as the refrigerant in the compressor, it is possible to suppress the propagation of disproportionation of the refrigerant in the discharge pipe in which the flow rate of the refrigerant is high.

Note that the compressor may be a compressor in which the flow rate of a refrigerant flowing through a discharge pipe under a predetermined high-pressure condition is greater than or equal to 5 m/s, or greater than or equal to 10 m/s. The higher the flow rate of the refrigerant flowing through the discharge pipe, the more effectively the propagation of disproportionation can be suppressed.

The use of a composition as a refrigerant in a compressor according to a second aspect is the use of the composition as the refrigerant in the compressor according to the first aspect, in which the composition includes one or more compounds selected from the group consisting of 1,2-difluoroethylene (HFO-1132), 1,1-difluoroethylene (HFO-1132a), 1,1,2-trifluoroethylene (HFO-1123), monofluoroethylene (HFO-1141), and perhaloolefins.

Note that 1,2-difluoroethylene may be trans-1,2-difluoroethylene [(E)-HFO-1132], cis-1,2-difluoroethylene [(Z)-HFO-1132], or a mixture of them.

The use of a composition as a refrigerant in a compressor according to a third aspect is the use of the composition as the refrigerant in the compressor according to the second aspect, in which the composition includes 1,2-difluoroethylene (HFO-1132) and/or 1,1,2-trifluoroethylene (HFO-1123).

The use of a composition as a refrigerant in a compressor according to a fourth aspect is the use of the composition as the refrigerant in the compressor according to any one of the first to third aspects, in which the predetermined high-pressure condition is a condition where the pressure of the refrigerant flowing through the discharge pipe of the compressor is greater than or equal to 1 MPa.

According to such use of the composition as the refrigerant in the compressor, it is possible to, even under a condition where the pressure of the refrigerant flowing through the discharge pipe of the compressor is greater than or equal to 1 MPa, which is likely to cause disproportionation of the refrigerant, suppress the propagation of the generated disproportionation.

A compressor according to a fifth aspect is a compressor for compressing a refrigerant. The refrigerant includes one or more compounds selected from the group consisting of ethylene-based fluoroolefins, 2,3,3,3-tetrafluoropropene (HFO-1234yf), and 1,3,3,3-tetrafluoropropene (HFO-1234ze). In the compressor, the flow rate of the refrigerant flowing through a discharge pipe of the compressor under a predetermined high-pressure condition is greater than or equal to 1 m/s.

Such a compressor can suppress the propagation of disproportionation of the refrigerant in the discharge pipe in which the flow rate of the refrigerant is high.

A refrigeration cycle apparatus according to a sixth aspect includes a refrigerant circuit. The refrigerant circuit includes the compressor according to the fifth aspect.

In such a refrigeration cycle apparatus, the propagation of disproportionation of a refrigerant circulating through the refrigerant circuit can be suppressed.

### BRIEF DESCRIPTION OF THE DRAWINGS

Figure 1 is a schematic configuration diagram of a refrigeration cycle apparatus.
Figure 2 is a block configuration diagram of the refrigeration cycle apparatus.
Figure 3 is a side cross-sectional view illustrating a schematic configuration of a compressor.
Figure 4 is a plan cross-sectional view illustrating a region around a cylinder chamber of the compressor.

### DESCRIPTION OF EMBODIMENTS

Hereinafter, a compressor, a refrigeration cycle apparatus, and the use of a composition as a refrigerant in such a compressor or an apparatus will be specifically described with reference to examples. However, the following description is not intended to limit the present disclosure.

### (1) Refrigeration cycle apparatus 1

A refrigeration cycle apparatus 1 is an apparatus for performing vapor-compression refrigeration cycles to process a heat load of a target space. For example, the refrigeration cycle apparatus 1 is an air-conditioning apparatus for conditioning air in a target space.

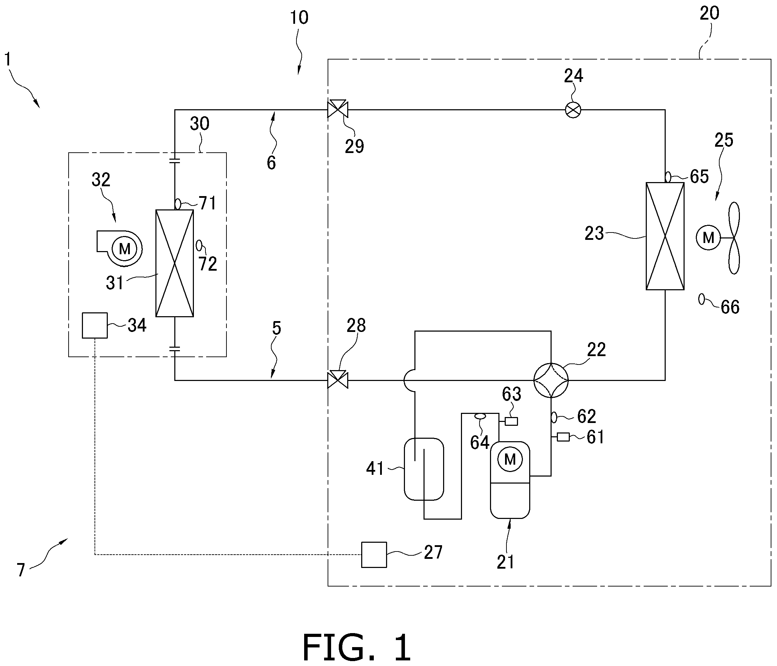

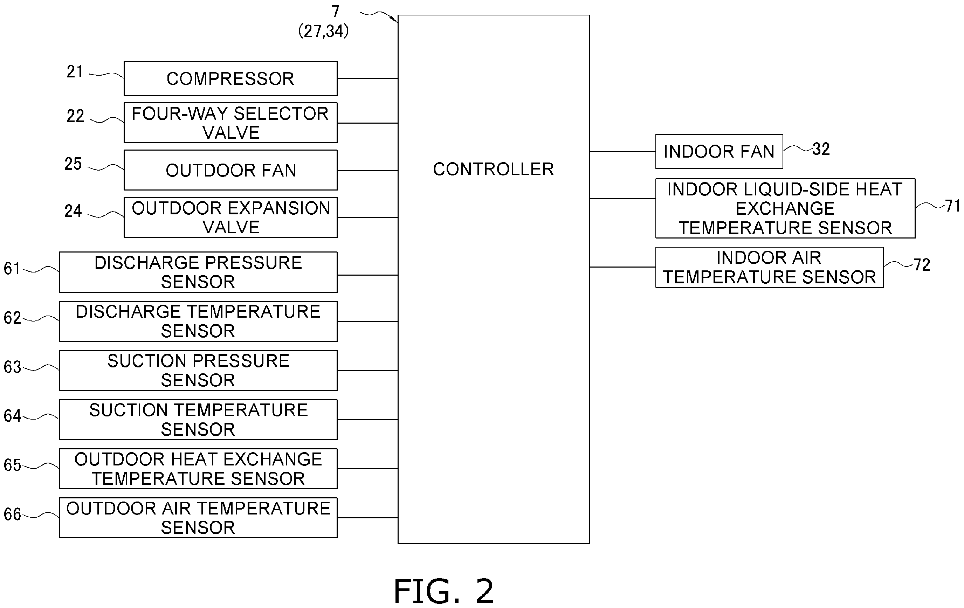

Figure 1 is a schematic configuration diagram of the refrigeration cycle apparatus. Figure 2 is a block configuration diagram of the refrigeration cycle apparatus.

The refrigeration cycle apparatus 1 mainly includes an outdoor unit 20; an indoor unit 30; a liquid-side refrigerant communication pipe 6 and a gas-side refrigerant communication pipe 5 each connecting the outdoor unit 20 and the indoor unit 30; a remote controller (not illustrated); and a controller 7 that controls the operation of the refrigeration cycle apparatus 1.

In the refrigeration cycle apparatus 1, refrigeration cycles are performed such that a refrigerant enclosed in a refrigerant circuit 10 is compressed, and is then cooled or condensed, and is then decompressed, and is then heated or evaporated, and is then compressed again. In the present embodiment, the refrigerant circuit 10 is filled with a refrigerant for performing vapor-compression refrigeration cycles.

### (2) Refrigerant

Examples of the refrigerant filling the refrigerant circuit 10 include one or more compounds selected from the group consisting of ethylene-based fluoroolefins, 2,3,3,3-tetrafluoropropene (HFO-1234yf), and 1,3,3,3-tetrafluoropropene (HFO-1234ze). Note that regarding the burning velocity defined by the ISO 817, 1,3,3,3-tetrafluoropropene (HFO-1234ze) with a burning velocity of 1.2 cm/s is more preferable than 2,3,3,3-tetrafluoropropene (HFO-1234yf) with a burning velocity of 1.5 cm/s. Regarding the LFL (Lower Flammability Limit) defined by the ISO 817, 1,3,3,3-tetrafluoropropene (HFO-1234ze) with a LFL of 65000 vol.ppm or 6.5% is more preferable than 2,3,3,3-tetrafluoropropene (HFO-1234yf) with a LFL of 62000 vol.ppm or 6.2%. In particular, the refrigerant may include one or more compounds selected from the group consisting of 1,2-difluoroethylene (HFO-1132), 1,1-difluoroethylene (HFO-1132a), 1,1,2-trifluoroethylene (HFO-1123), monofluoroethylene (HFO-1141), and perhaloolefins. Above all, the refrigerant preferably include 1,2-difluoroethylene (HFO-1132) and/or 1,1,2-trifluoroethylene (HFO-1123).

Herein, examples of ethylene-based fluoroolefins include 1,2-difluoroethylene (HFO-1132), 1,1-difluoroethylene (HFO-1132a), 1,1,2-trifluoroethylene (HFO-1123), monofluoroethylene (HFO-1141), and perhaloolefins. Examples of perhaloolefins include chlorotrifluoroethylene (CFO-1113) and tetrafluoroethylene (FO-1114).

Note that the refrigerant circuit 10 is also filled with refrigerator oil together with the aforementioned refrigerant.

### (3) Outdoor unit 20

The outdoor unit 20 is connected to the indoor unit 30 via the liquid-side refrigerant communication pipe 6 and the gas-side refrigerant communication pipe 5, and consists part of the refrigerant circuit 10. The outdoor unit 20 mainly includes a compressor 21, a four-way switching valve 22, an outdoor heat exchanger 23, an outdoor expansion valve 24, an outdoor fan 25, a receiver 41, a gas-side shut-off valve 28, and a liquid-side shut-off valve 29.

The compressor 21 is a device that compresses a low-pressure refrigerant in a refrigeration cycle up to a high pressure. Herein, the compressor 21 may be a hermetic compressor in which a rotary-type or scroll-type positive-displacement compression element is rotationally driven by a compressor motor. In the present embodiment, a rotary compressor is used. The compressor motor is used to change the volume, and its operating frequency can be controlled with an inverter.

The four-way switching valve 22 switches a flow channel of the refrigerant circuit 10. Specifically, the four-way switching valve 22 can switch between a state in which the discharge side of the compressor 21 and the outdoor heat exchanger 23 are connected and the suction side of the compressor 21 and the gas-side shut-off valve 28 are connected and a state in which the discharge side of the compressor 21 and the gas-side shut-off valve 28 are connected and the suction side of the compressor 21 and the outdoor heat exchanger 23 are connected.

The outdoor heat exchanger 23 is a heat exchanger that functions as a radiator or a condenser for a high-pressure refrigerant in a refrigeration cycle during the cooling operation, and functions as an evaporator for a low-pressure refrigerant in a refrigeration cycle during the heating operation.

The outdoor expansion valve 24 is provided between the liquid-side outlet of the outdoor heat exchanger 23 and the liquid-side shut-off valve 29 in the refrigerant circuit 10. The outdoor expansion valve 24 is a motor-operated expansion valve with an adjustable opening degree.

The outdoor fan 25 produces an air flow for causing outdoor air to be sucked into the outdoor unit 20, and causing the sucked air to exchange heat with a refrigerant in the outdoor heat exchanger 23, and then causing the air to be discharged to the outside. The outdoor fan 25 is rotationally driven by an outdoor fan motor.

The receiver 41 is a refrigerant container that is provided between the suction side of the compressor 21 and one of connection ports of the four-way switching valve 22, and that can store an excess refrigerant in the refrigerant circuit 10 as a liquid refrigerant.

The liquid-side shut-off valve 29 is a manual valve disposed at a portion of the outdoor unit 20 connected to the liquid-side refrigerant communication pipe 6.

The gas-side shut-off valve 28 is a manual valve disposed at a portion of the outdoor unit 20 connected to the gas-side refrigerant communication pipe 5.

The outdoor unit 20 includes an outdoor unit controller 27 that controls the operation of each portion forming the outdoor unit 20. The outdoor unit controller 27 has a microcomputer including a CPU and a memory, for example. The outdoor unit controller 27 is connected to an indoor unit controller 34 of each indoor unit 30 via a communication line, and transmits and receives control signals, for example.

The outdoor unit 20 is provided with a discharge pressure sensor 61, a discharge temperature sensor 62, a suction pressure sensor 63, a suction temperature sensor 64, an outdoor heat exchange temperature sensor 65, and an outdoor air temperature sensor 66, for example. Each of such sensors is electrically connected to the outdoor unit controller 27, and transmits a detection signal to the outdoor unit controller 27. The discharge pressure sensor 61 detects the pressure of a refrigerant flowing through a discharge pipe that connects the discharge side of the compressor 21 and one of the connection ports of the four-way switching valve 22. The discharge temperature sensor 62 detects the temperature of the refrigerant flowing through the discharge pipe. The suction pressure sensor 63 detects the pressure of a refrigerant flowing through a suction pipe that connects the suction side of the compressor 21 and the receiver 41. The suction temperature sensor 64 detects the temperature of the refrigerant flowing through the suction pipe. The outdoor heat exchange temperature sensor 65 detects the temperature of a refrigerant flowing through the liquid-side outlet of the outdoor heat exchanger 23 on the side opposite to the side connecting to the four-way switching valve 22. The outdoor air temperature sensor 66 detects the temperature of outdoor air before it passes through the outdoor heat exchanger 23.

### (4) Indoor unit 30

The indoor unit 30 is disposed on an indoor wall surface or ceiling as a target space, for example. The indoor unit 30 is connected to the outdoor unit 20 via the liquid-side refrigerant communication pipe 6 and the gas-side refrigerant communication pipe 5, and consists part of the refrigerant circuit 10.

The indoor unit 30 includes an indoor heat exchanger 31 and an indoor fan 32.

The indoor heat exchanger 31 is connected on its liquid side to the liquid-side refrigerant communication pipe 6, and is connected on its gas side to the gas-side refrigerant communication pipe 5. The indoor heat exchanger 31 is a heat exchanger that functions as an evaporator for a low-pressure refrigerant in a refrigeration cycle during the cooling operation, and functions as a condenser for a high-pressure refrigerant in a refrigeration cycle during the heating operation.

The indoor fan 32 produces an air flow for causing indoor air to be sucked into the indoor unit 30, and causing the sucked air to exchange heat with a refrigerant in the indoor heat exchanger 31, and then causing the air to be discharged to the outside. The indoor fan 32 is rotationally driven by an indoor fan motor.

The indoor unit 30 includes the indoor unit controller 34 that controls the operation of each unit forming the indoor unit 30. The indoor unit controller 34 includes a microcomputer including a CPU and a memory, for example. The indoor unit controller 34 is connected to the outdoor unit controller 27 via the communication line, and transmits and receives control signals, for example.

The indoor unit 30 is provided with an indoor liquid-side heat exchange temperature sensor 71 and an indoor air temperature sensor 72, for example. Each of such sensors is electrically connected to the indoor unit controller 34, and transmits a detection signal to the indoor unit controller 34. The indoor liquid-side heat exchange temperature sensor 71 detects the temperature of a refrigerant flowing through the liquid-refrigerant-side outlet of the indoor heat exchanger 31. The indoor air temperature sensor 72 detects the temperature of indoor air before it passes through the indoor heat exchanger 31.

### (5) Controller 7

In the refrigeration cycle apparatus 1, the outdoor unit controller 27 and the indoor unit controller 34 are connected via the communication line, thus consisting the controller 7 that controls the operation of the refrigeration cycle apparatus 1.

The controller 7 mainly includes a CPU (central processing unit) and a memory, such as ROM and RAM. Note that various processes and control performed by the controller 7 are implemented as the portions, which are included in the outdoor unit controller 27 and/or the indoor unit controller 34, function in an integrated manner.

### (6) Operation modes

The refrigeration cycle apparatus 1 can execute at least a cooling operation mode and a heating operation mode.

The controller 7 determines whether the instruction indicates the cooling operation mode or the heating operation mode, based on an instruction received from the remote controller or the like, and executes the mode.

In the cooling operation mode, the operating frequency of the compressor 21 is controlled to control the volume so that the evaporating temperature of the refrigerant in the refrigerant circuit 10 reaches a target evaporating temperature, for example.

The gaseous refrigerant discharged from the compressor 21 is condensed in the outdoor heat exchanger 23 via the four-way switching valve 22. The refrigerant that has flowed through the outdoor heat exchanger 23 is decompressed while passing through the outdoor expansion valve 24.

The refrigerant decompressed in the outdoor expansion valve 24 flows through the liquid-side refrigerant communication pipe 6 via the liquid-side shut-off valve 29, and is then sent to the indoor unit 30. After that, the refrigerant evaporates in the indoor heat exchanger 31, and then flows into the gas-side refrigerant communication pipe 5. The refrigerant that has flowed through the gas-side refrigerant communication pipe 5 is sucked into the compressor 21 again via the gas-side shut-off valve 28, the four-way switching valve 22, and the receiver 41.

In the heating operation mode, the operating frequency of the compressor 21 is controlled to control the volume so that the condensation temperature of the refrigerant in the refrigerant circuit 10 reaches a target condensation temperature, for example.

The gaseous refrigerant discharged from the compressor 21 flows through the four-way switching valve 22 and the gas-side refrigerant communication pipe 5, and then flows into the gas-side end of the indoor heat exchanger 31 of the indoor unit 30 so that the refrigerant is condensed or is allowed to radiate heat in the indoor heat exchanger 31. The refrigerant, which has been condensed or has been allowed to radiate heat in the indoor heat exchanger 31, flows through the liquid-side refrigerant communication pipe 6, and then flows into the outdoor unit 20.

The refrigerant that has passed through the liquid-side shut-off valve 29 of the outdoor unit 20 is decompressed in the outdoor expansion valve 24. The refrigerant that has been decompressed in the outdoor expansion valve 24 evaporates in the outdoor heat exchanger 23, and is sucked into the compressor 21 again via the four-way switching valve 22 and the receiver 41.

### (7) Detailed configuration of compressor 21

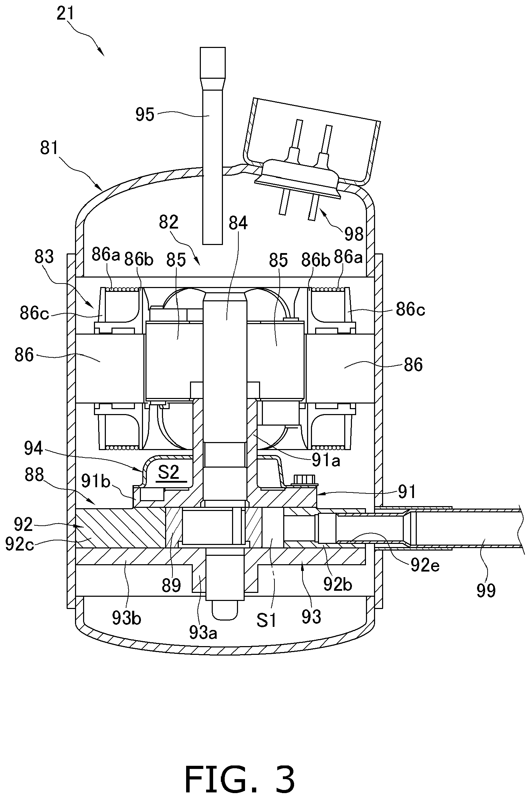

The compressor 21 of the present embodiment is a one-cylinder rotary compressor as illustrated in Figure 3, and is a rotary compressor including a casing 81 as well as a drive mechanism 82 and a compression mechanism 88 disposed in the casing 81. In the compressor 21, the compression mechanism 88 is disposed below the drive mechanism 82 in the casing 81.

### (7-1) Drive mechanism

The drive mechanism 82 is housed in the upper part of the internal space of the casing 81, and drives the compression mechanism 88. The drive mechanism 82 includes a motor 83 as a drive source, and a crankshaft 84 as a drive shaft attached to the motor 83.

The motor 83 is a motor for rotationally driving the crankshaft 84, and mainly includes a rotor 85 and a stator 86. The rotor 85 has the crankshaft 84 fit-inserted in its internal space, and rotates together with the crankshaft 84. The rotor 85 includes laminated electromagnetic steel plates and a magnet embedded in a rotor body. The stator 86 is disposed radially outward of the rotor 85 with a predetermined space from the rotor 85. The stator 86 is disposed while being divided into a plurality of sections at predetermined intervals in the circumferential direction. That is, the stator 86 includes a plurality of sections provided in the circumferential direction each including laminated electromagnetic steel plates and a coil 86a wound around a stator body 86c having teeth 86b. In the motor 83, the rotor 85 is caused to rotate together with the crankshaft 84 with an electromagnetic force that is generated in the stator 86 as a current is passed through the coil 86a. The coil 86a of the stator 86 is supplied with power via a wire (not illustrated) connected to a terminal portion 98 provided at the upper end of the casing 81.

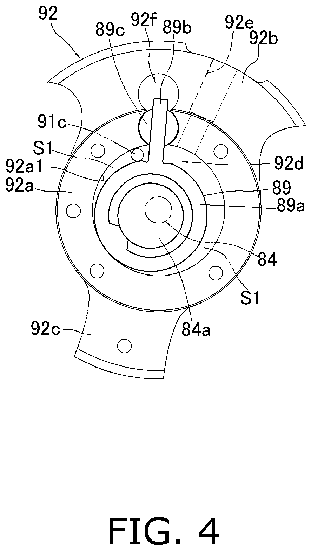

The crankshaft 84 is fit-inserted in the rotor 85, and rotates about the rotation axis. As illustrated in Figure 4, a crankpin 84a, which is an eccentric portion of the crankshaft 84, is inserted through a roller 89a (which is described below) of a piston 89 of the compression mechanism 88, and fits in the roller 89a in a state where it can transmit torque from the rotor 85. The crankshaft 84 rotates with the rotation of the rotor 85, and eccentrically rotates the crankpin 84a, thus causing the roller 89a of the piston 89 of the compression mechanism 88 to revolve. That is, the crankshaft 84 has a function of transmitting a drive force of the motor 83 to the compression mechanism 88.

### (7-2) Compression mechanism

The compression mechanism 88 is housed in the lower part of the casing 81. The compression mechanism 88 compresses a refrigerant sucked thereinto via a suction pipe 99. The compression mechanism 88 is a rotary compression mechanism, and mainly includes a front head 91, a cylinder 92, the piston 89, and a rear head 93. A refrigerant compressed in a compression chamber S1 of the compression mechanism 88 is discharged to a space in which the motor 83 is disposed and the lower end of a discharge pipe 95 is located from a front-head discharge hole 91c formed in the front head 91 via a muffler space S2 surrounded by the front head 91 and a muffler 94.

### (7-2-1) Cylinder

The cylinder 92 is a metal cast member. The cylinder 92 includes a cylindrical central portion 92a, a first extension portion 92b extending radially outward from the central portion 92a to one side, and a second extension portion 92c extending from the central portion 92a to a side opposite to the first extension portion 92b. The first extension portion 92b has formed therein a suction hole 92e for sucking a low-pressure refrigerant in a refrigeration cycle. A cylindrical space on the inner side of an inner peripheral face 92a1 of the central portion 92a corresponds to a cylinder chamber 92d into which a refrigerant sucked through the suction hole 92e flows. The suction hole 92e extends from the cylinder chamber 92d to an outer peripheral face of the first extension portion 92b, and is open at the outer peripheral face of the first extension portion 92b. The suction hole 92e has inserted therein the tip end portion of the suction pipe 99. In addition, the cylinder chamber 92d houses the piston 89 for compressing a refrigerant that has flowed into the cylinder chamber 92d, for example.

The cylinder chamber 92d, which is formed by the cylindrical central portion 92a of the cylinder 92, has at its lower end a first end that is open, and has at its upper end a second end that is open. The first end that is the lower end of the central portion 92a is closed by the rear head 93 described below. The second end that is the upper end of the central portion 92a is closed by the front head 91 described below.

The cylinder 92 has formed therein a blade oscillation space 92f in which a bushing 89c and a blade 89b described below are disposed. The blade oscillation space 92f is formed across a region from the central portion 92a to the first extension portion 92b, and the blade 89b of the piston 89 is oscillatably supported on the cylinder 92 via the bushing 89c. The blade oscillation space 92f is formed to extend toward the outer periphery side from the cylinder chamber 92d around the suction hole 92e as seen in plan view.

### (7-2-2) Front head

As illustrated in Figure 3, the front head 91 includes a front-head disc portion 91b that closes the opening at the second end, which is the upper end, of the cylinder 92, and an upper bearing portion 91a extending upward from the peripheral edge of the front-head opening in the center of the front-head disc portion 91b. The upper bearing portion 91a is cylindrical and functions as a bearing for the crankshaft 84.

The front-head disc portion 91b has formed therein the front-head discharge hole 91c at a plane position illustrated in Figure 4. A refrigerant, which has been compressed in the compression chamber S1 having a variable volume in the cylinder chamber 92d of the cylinder 92, is intermittently discharged through the front-head discharge hole 91c. The front-head disc portion 91b is provided with a discharge valve that opens or closes the outlet of the front-head discharge hole 91c. When pressure in the compression chamber S1 has become higher than pressure in the muffler space S2, the discharge valve is opened due to the pressure difference, thereby causing the refrigerant to be discharged to the muffler space S2 through the front-head discharge hole 91c.

### (7-2-3) Muffler

As illustrated in Figure 3, the muffler 94 is attached to the top face of the peripheral edge portion of the front-head disc portion 91b of the front head 91. The muffler 94 forms the muffler space S2 together with the top face of the front-head disc portion 91b and the outer peripheral face of the upper bearing portion 91a, and attempts to reduce noise generated along with the discharge of a refrigerant. The muffler space S2 and the compression chamber S1 communicate with each other via the front-head discharge hole 91c when the discharge valve is open as described above.

The muffler 94 has formed therein a central muffler opening (not illustrated) for passing the upper bearing portion 91a, and a muffler discharge hole (not illustrated) through which a refrigerant is flowed from the muffler space S2 to a housing space for the motor 83 above the muffler space S2.

Note that the muffler space S2, the housing space for the motor 83, the space where the discharge pipe 95 is located above the motor 83, and a space where lubricating oil accumulates below the compression mechanism 88, for example, are all continuous, and form a high-pressure space with equal pressure.

### (7-2-4) Rear head

The rear head 93 includes a rear-head disc portion 93b that closes the opening at the first end, which is the lower end, of the cylinder 92, and a lower bearing portion 93a as a bearing extending downward from the peripheral edge portion of the opening in the center of the rear-head disc portion 93b. The front-head disc portion 91b, the rear-head disc portion 93b, and the central portion 92a of the cylinder 92 form the cylinder chamber 92d as illustrated in Figure 4. The upper bearing portion 91a and the lower bearing portion 93a are cylindrical boss portions, and axially support the crankshaft 84.

### (7-2-5) Piston

The piston 89 is disposed in the cylinder chamber 92d, and is attached to the crankpin 84a that is the eccentric portion of the crankshaft 84. The piston 89 is a member integrating the roller 89a and the blade 89b. The blade 89b of the piston 89 is disposed in the blade oscillation space 92f formed in the cylinder 92, and is oscillatably supported on the cylinder 92 via the bushing 89c as described above. The blade 89b is slidable on the bushing 89c, and oscillates and also repeatedly moves away from the crankshaft 84 and closer to the crankshaft 84 during operation.

As illustrated in Figure 4, the roller 89a and the blade 89b of the piston 89 form the compression chamber S 1, which has a volume variable with the revolution of the piston 89, such that the roller 89a and the blade 89b of the piston 89 partition the cylinder chamber 92d. The compression chamber S1 is a space surrounded by the inner peripheral face 92a1 of the central portion 92a of the cylinder 92, the top face of the rear-head disc portion 93b, the bottom face of the front-head disc portion 91b, and the piston 89. The volume of the compression chamber S1 changes with the revolution of the piston 89 so that a low-pressure refrigerant sucked thereinto through the suction hole 92e is compressed to become a high-pressure refrigerant, and is then discharged to the muffler space S2 through the front-head discharge hole 91c.

### (7-3) Operation

In the foregoing compressor 21, the volume of the compression chamber S1 changes with the movement of the piston 89 of the compression mechanism 88 that revolves with the eccentric rotation of the crankpin 84a. Specifically, first, while the piston 89 starts revolving, a low-pressure refrigerant is sucked into the compression chamber S1 through the suction hole 92e. The volume of the compression chamber S1 facing the suction hole 92e gradually increases while it sucks the refrigerant. When the piston 89 further revolves, the communication state between the compression chamber S1 and the suction hole 92e is canceled so that the refrigerant starts to be compressed in the compression chamber S 1. After that, the volume of the compression chamber S 1 that communicates with the front-head discharge hole 91c becomes significantly small, and the pressure of the refrigerant therein increases. After that, as the piston 89 further revolves, the refrigerant with the increased pressure pushes and opens the discharge valve through the front-head discharge hole 91c, and thus is discharged to the muffler space S2. The refrigerant introduced into the muffler space S2 is discharged to a space above the muffler space S2 through the muffler discharge hole of the muffler 94. The refrigerant discharged to the outside of the muffler space S2 passes through a space between the rotor 85 and the stator 86 of the motor 83 to cool the motor 83, and is then discharged from the discharge pipe 95.

### (8) Control of compressor

During operation in the cooling operation mode and operation in the heating operation mode, for example, the controller 7 controls the operating frequency of the compressor 21 to control its volume so as to attain a predetermined target evaporating temperature and a predetermined target condensation temperature, respectively, as target values.

Herein, even when a disproportionation reaction of a refrigerant has occurred inside the compressor 21 or in the discharge pipe 95, the controller 7 controls the compressor so as to suppress the propagation of the disproportionation reaction to a portion beyond the discharge pipe 95 in the refrigerant circuit 10.

During the control, the controller 7 controls the operating frequency so that the flow rate of a gaseous refrigerant flowing through the discharge pipe 95 of the compressor 21 becomes greater than or equal to 1 m/s when the compressor 21 has entered an operation state in which its discharge pressure is greater than or equal to 1 MPa. Herein, the controller 7 performs control of increasing the operating frequency in the aforementioned volume control if necessary for allowing the flow rate of a gaseous refrigerant flowing through the discharge pipe 95 to become greater than or equal to 1 m/s.

Herein, the controller 7 can use the pressure of the refrigerant detected by the discharge pressure sensor 61 as the discharge pressure of the compressor 21. In addition, the controller 7 can determine the flow rate of the gaseous refrigerant flowing through the discharge pipe 95 of the compressor 21 by determining the circulation volume, which is the volume flow rate of the refrigerant, based on a known relational expression using the pressure of the refrigerant detected by the suction pressure sensor 63, the temperature of the refrigerant detected by the suction temperature sensor 64, and a predetermined piston displacement and volumetric efficiency of the compressor 21, and dividing the determined circulation volume of the refrigerant by the diameter of the discharge pipe 95.

### (9) Feature of embodiment

In the refrigeration cycle apparatus 1 of the present embodiment, a refrigerant that may undergo a disproportionation reaction is used. Such a disproportionation reaction of the refrigerant occurs with a certain probability under an environment where predetermined high-temperature conditions, high-pressure conditions, and ignition energy conditions are satisfied. Then, the disproportionation reaction may propagate to surrounding regions from the portion where the disproportionation reaction has occurred.

In response, the inventors used 1,2-difluoroethylene (HFO-1132) as the refrigerant, and prepared a predetermined flow channel connecting to an ignition source to conduct a test of observing a view in which a disproportionation reaction generated in the ignition source propagates, using a super slow camera while changing the flow rate of the refrigerant. The test results demonstrate that the propagation of the disproportionation reaction can be suppressed more when the flow rate of the refrigerant is greater than or equal to 1 m/s than when the flow rate of the refrigerant is less than 1 m/s, and also demonstrate that the effects of suppressing the propagation of the disproportionation reaction are more excellent when the flow rate of the refrigerant is even greater.

The compressor 21 for which the refrigerant of the present embodiment is used, and the refrigeration cycle apparatus 1 including such a compressor 21 are configured such that the flow rate of a refrigerant flowing through the discharge pipe 95 of the compressor 21 under predetermined high-pressure conditions becomes greater than or equal to 1 m/s. Accordingly, even when an unstable refrigerant is used in the compressor 21 and the refrigeration cycle apparatus 1 of the present embodiment, and such a refrigerant undergoes a disproportionation reaction inside the compressor 21 or in the discharge pipe 95, it is possible to suppress the propagation of the disproportionation reaction in the discharge pipe 95.

### (10) Other embodiments

### (10-1) Another embodiment A

The foregoing embodiment has exemplarily illustrated a case where the operating frequency is controlled such that the flow rate of a gaseous refrigerant flowing through the discharge pipe 95 becomes greater than or equal to 1 m/s when the compressor 21 has entered an operation state in which its discharge pressure is greater than or equal to 1 MPa.

In contrast, it is also possible to control the operating frequency such that the flow rate of a gaseous refrigerant flowing through the discharge pipe 95 becomes greater than or equal to 1 m/s when the compressor 21 has entered an operation state in which its discharge pressure is greater than or equal to 3 MPa or greater than or equal to 5 MPa, which is more likely to cause a disproportionation reaction.

### (10-2) Another embodiment B

The foregoing embodiment has exemplarily illustrated a case where the flow rate of a refrigerant flowing through the discharge pipe 95 of the compressor 21 becomes greater than or equal to 1 m/s so that the propagation of a disproportionation reaction is suppressed.

In contrast, the flow rate to be controlled is not limited to 1 m/s. For example, the flow rate of a refrigerant flowing through the discharge pipe 95 of the compressor 21 may become greater than or equal to 3 m/s, or greater than or equal to 5 m/s, or further, greater than or equal to 10 m/s. In this manner, the higher the flow rate of a refrigerant flowing through the discharge pipe 95 of the compressor 21, the more effectively the propagation of a disproportionation reaction can be suppressed.

### (10-3) Another embodiment C

The foregoing embodiment has exemplarily illustrated a case where a rotary compressor is used as the compressor 21.

In contrast, a compressor for suppressing the propagation of a disproportionation reaction by increasing the flow rate through the discharge pipe 95 is not limited to a rotary compressor, and may be a known scroll compressor or swing compressor.

### (Supplement)

Although the embodiments of the present disclosure have been described above, it is to be understood that various changes to the forms or details are possible without departing from the spirit or scope of the present disclosure recited in the claims.

### REFERENCE SIGNS LIST

1 Refrigeration cycle apparatus
10 Refrigerant circuit
21 Compressor
95 Discharge pipe

### CITATION LIST

### PATENT LITERATURE

[Patent Literature 1] Japanese Patent Laid-Open No. 2019-196312

## Claims

1. Use of a composition as a refrigerant in a compressor (21),
wherein:
the composition comprises one or more compounds selected from the group consisting of ethylene-based fluoroolefins, 2,3,3,3-tetrafluoropropene (HFO-1234yf), and 1,3,3,3-tetrafluoropropene (HFO-1234ze), and
a flow rate of the refrigerant flowing through a discharge pipe (95) of the compressor under a predetermined high-pressure condition is greater than or equal to 1 m/s.

2. The use according to claim 1, wherein the composition comprises one or more compounds selected from the group consisting of 1,2-difluoroethylene (HFO-1132), 1,1-difluoroethylene (HFO-1132a), 1,1,2-trifluoroethylene (HFO-1123), monofluoroethylene (HFO-1141), and perhaloolefins.

3. The use according to claim 2, wherein the composition comprises 1,2-difluoroethylene (HFO-1132) and/or 1,1,2-trifluoroethylene (HFO-1123).

4. The use according to any one of claims 1 to 3, wherein the predetermined high-pressure condition is a condition where a pressure of the refrigerant flowing through the discharge pipe of the compressor is greater than or equal to 1 MPa.

5. A compressor (21) for compressing a refrigerant, the refrigerant comprising one or more compounds selected from the group consisting of ethylene-based fluoroolefins, 2,3,3,3-tetrafluoropropene (HFO-1234yf), and 1,3,3,3-tetrafluoropropene (HFO-1234ze),
wherein:
a flow rate of the refrigerant flowing through a discharge pipe (95) of the compressor under a predetermined high-pressure condition is greater than or equal to 1 m/s.

6. A refrigeration cycle apparatus (1) comprising a refrigerant circuit (10) including the compressor (21) of claim 5.
